# EUROPÄISCHE PATENTANMELDUNG

(11) **EP 1 542 349 A2**
(43) Veröffentlichungstag der Anmeldung: **15.06.2005**
(21) Anmeldenummer: 04029149.4
(22) Anmeldetag: 09.12.2004
(51) Int. Cl.: H02M 7/48, H02M 7/5395

(54) **PWM-Motoransteuerung im Strommodus mit Zwangsabschaltung**

(30) Priorität: 12.12.2003 DE 10358129
(71) Anmelder: Diehl AKO Stiftung & Co. KG, 88239 Wangen im Allgäu (DE)
(72) Erfinder: Florea, Radu Liviu, Dr., 90478 Nürnberg (DE)
(74) Vertreter: Diehl Patentabteilung

(57) **Zusammenfassung**

Um eine durch Pulsweitenmodulierung im Strommodus verursachte Geräuschemission bei einem Elektromotor (2) zu unterdrücken, werden ein Verfahren und eine zur Durchführung des Verfahrens ausgebildete Steuereinheit (1) angegeben. Dabei ist vorgesehen, ein PWM-Signal (SP) innerhalb jedes Taktes (T) eines das PWM-Signal (SP) taktenden Taktsignals (ST) für eine vorgegebene Mindestschaltzeit (t0) zwangsabzuschalten.

## Beschreibung

Die Erfindung betrifft ein Verfahren zur pulsweitenmodulierten Steuerung eines Antriebsstroms für einen Elektromotor. Die Erfindung bezieht sich weiterhin auf eine zugehörige, den Antriebsstrom erzeugende Steuereinheit.

In einer Vielzahl von Technikgebieten hat sich der Einsatz von bürstenlosen Elektromotoren zu Antriebszwecken durchgesetzt. So ist der Einsatz eines solchen Motors als Antrieb eines Festplattenlaufwerks genauso gebräuchlich wie der Einsatz eines solchen Motors als Fahrzeugantrieb. Bürstenlose Elektromotoren finden darüber hinaus Verwendung bei Haushaltsgeräten (Kühlschränke, Waschmaschinen, etc.) sowie als Antrieb von industriellen Maschinen.

Bei einem bürstenlosen, als Synchronmotor ausgebildeten Elektromotor wird durch entsprechende Schaltung mehrerer Phasen des Motors ein elektromagnetisches Drehfeld erzeugt, das ein mechanisches Drehmoment zwischen dem Stator und dem Rotor des Elektromotors hervorruft und somit den Rotor zu einer der Umlauffrequenz des Drehfeldes folgenden Rotation antreibt. Als Phase wird hierbei im engeren Sinne eine Komponente des Drehfeldes bezeichnet. Ein Elektromotor enthält mindestens zwei, häufig drei solcher Phasen, die zueinander um einen Winkel versetzt bezüglich der Rotorachse angeordnet sind und sich additiv zur Bildung des Drehfeldes überlagern. Jede dieser Feldkomponenten wird erzeugt von einer zugehörigen elektrischen Spulenanordnung, die nachfolgend im Begriff der "Phase" stets mit umfasst ist. Bei einem bürstenlosen Elektromotor sind die Phasen, und damit das elektromagnetische Drehfeld, häufig dem Stator des Elektromotors zugeordnet, während der Rotor einen Permanentmagneten umfasst.

Das Kennzeichen eines bürstenlosen Elektromotors ist, dass die Phasen elektronisch kommutiert, d.h. geschaltet werden. Die den Antriebsstrom für den Elektromotor erzeugende Steuereinheit umfasst herkömmlicherweise für jede Phase ein Paar von elektronischen Leistungsschaltern, die von einer Phasensteuerung angesteuert werden.

Es ist üblich, die Drehzahl- bzw. Leistungssteuerung eines solchen Elektromotors durch Phasenanschnitt und/oder Phasenabschnitt des phasengleichgerichteten Antriebsstroms vorzunehmen. Derartige Verfahren sind beispielsweise aus der DE 101 32 486 A1 oder der DE 43 01 203A1 bekannt.

Alternativ kann die Drehzahl bzw. Leistung des Elektromotors durch so genannten Pulsweitenmodulierung (PWM) gesteuert werden. Hierbei wird der während einer Kommutierungsperiode einer Phase zugeleitete Antriebsstrom in eine Serie kurzer Pulse unterteilt. Die Weite, d.h. die zeitliche Länge dieser Pulse wird derartig moduliert, dass die gewünschte Drehzahl oder Leistung erreicht wird.

Bei einer herkömmlichen, in einem so genannten Strommodus betriebenen Pulsweitenmodulierung wird in durch einen Taktgeber vorgegebenen Zeitschritten jeweils ein Steuerpuls eines PWM-Signals gestartet. Der Steuerpuls schaltet wiederum den Antriebsstrom in der anzusteuernden Phase des Elektromotors, wodurch der Motorstrom sukzessive ansteigt. Der Steuerpuls wird nun so lange aufrechterhalten, bis der Motorstrom einen vorgegebenen Referenzwert überschreitet. Bei Überschreitung des Referenzwertes wird der Steuerpuls abgebrochen, und entsprechend die Motorphase wieder abgeschaltet, so dass der Motorstrom sukzessive absinkt. Mit dem nächstfolgenden Taktpuls des Taktgebers wird dann der nächste Steuerpuls gestartet und der beschriebene Zyklus wiederholt.

Die Frequenz des Taktsignals ist in der Regel außerhalb des hörbaren Frequenzspektrums, insbesondere in der Größenordnung von 20 kHz gewählt. Hierdurch soll vermieden werden, dass eine im Zuge der Pulsweitenmodulierung des Antriebsstroms im Elektromotor verursachte Schallwellenbildung zu einer hörbaren Geräuscherzeugung und damit einer möglichen Lärmbelastung führt.

Unter bestimmten Arbeitsbedingungen kann es jedoch vorkommen, dass der Referenzwert des Motorstroms nicht innerhalb einer Taktperiode erreicht wird. Der Steuerpuls des PWM-Signals bleibt hierdurch bei der herkömmlichen PWM-Steuerung über mehrere Taktzyklen bestehen. Das PWM-Signal, und damit auch der Antriebsstrom können hierdurch Frequenzkomponenten im hörbaren Frequenzbereich erhalten, die beim Betrieb des Motors eine mitunter störende Geräuschentwicklung verursachen.

Der Erfindung liegt die Aufgabe zugrunde, ein Verfahren zur pulsweitenmodulierten Steuerung eines Antriebsstroms für einen Elektromotor anzugeben, bei dem eine hörbare Geräuschentwicklung infolge der Pulsweitenmodulierung unterdrückt ist. Der Erfindung liegt weiterhin die Aufgabe zugrunde, eine zur Durchführung des Verfahrens besonders geeignete Steuereinheit anzugeben.

Bezüglich des Verfahrens wird die Aufgabe erfindungsgemäß gelöst durch die Merkmale des Anspruchs 1. Bezüglich der zugehörigen Steuereinheit wird die Aufgabe erfindungsgemäß gelöst durch die Merkmale des Anspruchs 3.

Danach wird zur Modulierung des Antriebsstroms ein PWM-Signal erzeugt, dessen Steuerpulse nach Vorgabe eines zeitlich periodischen Taktsignals gestartet werden, wobei ein Steuerpuls abgebrochen wird, wenn der Motorstrom einen vorgegebenen Referenzwert erreicht oder überschreitet. Zur Unterdrückung langwelliger Anteile des PWM-Signals ist vorgesehen, dass das PWM-Signal innerhalb jeder Periode des Taktsignals für eine vorgegebene Mindestschaltzeit zwangsabgeschaltet wird.

In einer besonders einfachen Ausführung des Verfahrens wird die Zwangsabschaltung erreicht, indem ein Pulsvorgabesignal mit dem Taktsignal zur Erzeugung des PWM-Signals UND-verknüpft wird. Unabhängig von der Form des Pulsvorgabesignals wird die Zwangsabschaltung des PWM-Signals dadurch sichergestellt, dass als Taktsignal ein binäres Signal herangezogen wird, das innerhalb jeder Periode während der Mindestschaltzeit einen "0"-Wert annimmt. Dass die Zwangsabschaltung allein über die Form des Taktsignals gesteuert werden kann, liegt an den mathematischen Eigenschaften einer logischen UND-Verknüpfung, die als Ausgangswert stets "0" erzeugt, sobald einer der beiden Eingangswerte den Wert "0" hat. Als Pulsvorgabesignal wird bevorzugt ein binäres Signal verwendet, wie es von einer herkömmlichen PWM-Steuerung als PWM-Signal vorliegt. Wie vorstehend erwähnt wird ein solches Signal durch einen Puls des Taktsignals auf den Wert "1" gesetzt, und auf "0" zurückgesetzt, wenn der Motorstrom einen vorgegebenen Referenzwert überschreitet.

Die zwangsabschaltende UND-Verknüpfung ist baulich einfach zu realisieren durch ein UND-Gatter, d.h. durch ein elektronisches Standard-Bauteil, das einer herkömmlichen Strommodus-basierten PWM-Steuerung nachgeschaltet ist. Ein Eingang des UND-Gatters ist hierbei mit dem Signalausgang des Taktgebers verbunden.

Nachfolgend wird ein Ausführungsbeispiel der Erfindung anhand einer Zeichnung näher erläutert. Darin zeigen:
- Fig. 1: in einem schematisch vereinfachten Schaltbild eine einen Elektromotor ansteuernde Steuereinheit mit einer Stromverwaltung zur Vorgabe eines PWM-Signals,
- Fig. 2: in einem schematischen Schaltbild die Stromverwaltung gemäß Fig. 1,
- Fig. 3: in einem schematischen zeitlichen Diagramm ein durch die Stromverwaltung gemäß Fig. 2 hervorgerufenes Schaltspiel und
- Fig. 4: in Darstellung gemäß Fig. 3 ein weiteres Schaltspiel.

Einander entsprechende Teile und Größen sind in allen Figuren stets mit den gleichen Bezugszeichen versehen.

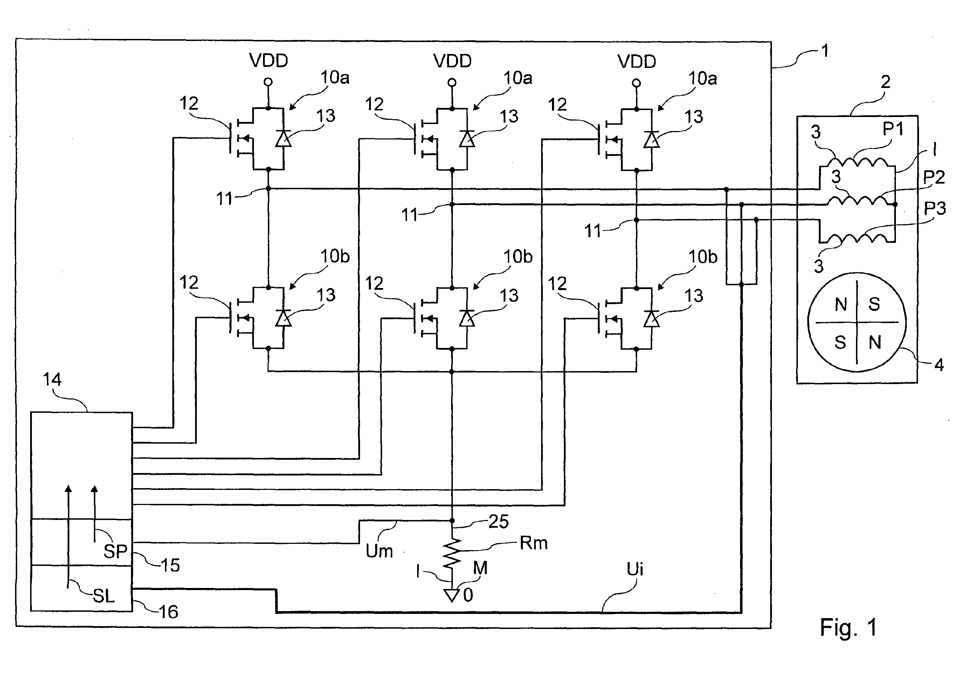

In Fig. 1 ist eine Steuereinheit 1 dargestellt, die einen Elektromotor 2 mit einem Antriebsstrom I versorgt. Der Elektromotor 2 ist in der beispielhaften Darstellung gemäß Fig. 1 als dreiphasiger Synchronmotor ausgebildet. Er umfasst demnach die drei Phasen P1, P2 und P3, die in der Darstellung durch ihre jeweilige Erregerspule 3 repräsentiert sind. Die Phasen P1 bis P3 sind innerhalb des Elektromotors 2 nach Art einer Sternschaltung miteinander verschaltet. Der Elektromotor 2 umfasst weiterhin einen, ein permanentes Magnetfeld aufweisenden Rotor 4, der in Fig. 1 lediglich angedeutet ist.

Zur Kommutierung, das heißt Beschaltung der Phasen P1 bis P3 umfasst die Steuereinheit 1 sechs Leistungsschalter 10a und 10b, von denen je ein Leistungsschalter 10a zwischen den Phasenabgriff 11 der jeweils zugehörigen Phase P1, P2,P3 und das Betriebspotenzial VDD, und je ein weiterer Leistungsschalter 10b zwischen den Phasenabgriff 11 der zugehörigen Phase P1,P2,P3 und Masse M geschaltet ist. Jeder Leistungsschalter 10a, 10b umfasst einen Leistungstransistor 12 (insbesondere MOSFET oder IGBT) und eine diesem parallel geschaltete Freilaufdiode 13. Die Leistungstransistoren 12 werden gate-seitig von einer Phasensteuerung 14 angesteuert.

Die Phasensteuerung 14 wiederum wird von einer Stromverwaltung 15 und einer Rotorlageerfassungseinheit 16 angesteuert. Sowohl die Phasensteuerung 13 als auch die Stromverwaltung 15 und die Rotorlageerfassungseinheit 16 sind bevorzugt als elektronische Schaltung ausgeführt. Teile der Funktionalität der Phasensteuerung 14, Stromverwaltung 15 und Rotorlageerfassungseinheit 16 können bedarfsweise auch durch einen Mikrokontroller wahrgenommen werden.

Die Rotorlageerfassungseinheit 16 dient zur Erfassung der Lage des Rotorfeldes des Elektromotors 2 bezüglich der Orientierung der Phasen P1, P2 und P3. Die Rotorlageerfassungseinheit 16 leitet der Phasensteuerung 14 ein Lagesignal SL zu, in Abhängigkeit von welchem die Phasensteuerung 14 die Leistungsschalter 10a und 10b derart angesteuert, dass sich die Magnetfeldkomponenten der Phasen P1 bis P3 zu einem elektromagnetischen Drehfeld aufsummieren, das mit der Drehfrequenz des Rotors 4 rotiert. Hierbei sind stets nur zwei der drei Phasen P1 bis P3 angesteuert. Die jeweils nicht angesteuerte dritte Phase P1, P2, P3 dient zur Messung des von dem Rotormagnetfeld in die Phasen P1 bis P3 induzierten Gegen-EMK (Elektro-Magnetische Kraft). Die durch die Gegen-EMK in die Phasenleitungen eingespeiste Induktionsspannung Ui wird an den Phasenleitungen abgegriffen und der Rotorlageerfassungseinheit 16 als Eingangsgröße zugeführt. Diese wertet die Gegen-EMK im Rahmen einer sensorlosen Kontrolle aus und erzeugt bei jedem Nulldurchgang der Gegen-EMK einen Positionsimpuls des Lagesignals SL.

Die Stromverwaltung 15 dient dagegen zur Drehzahl- bzw. Leistungssteuerung des Elektromotors 2. Die Stromverwaltung 15 vollzieht diese Regelung in Form einer Pulsweitenmodulierung (PWM) im Strommodus.

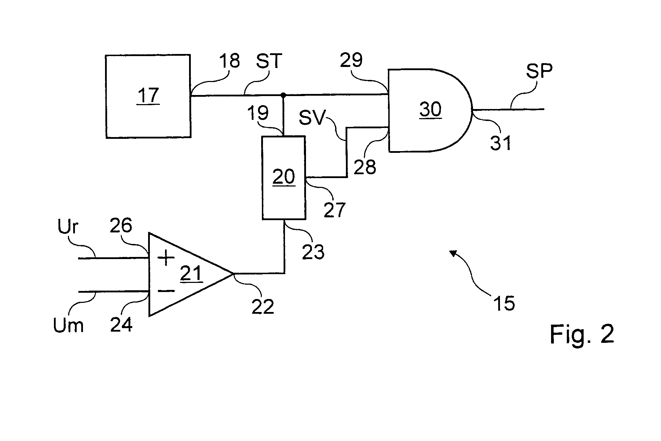

Der Aufbau der Stromverwaltung 15 ist in Fig. 2 in einem schematisch vereinfachten Schaltbild näher dargestellt. Die hier abgebildete Stromverwaltung 15 umfasst einen Taktgeber 17, dessen Signalausgang 18 mit dem setzenden (SET-)Eingang 19 eines Bistabilschalters 20 verbunden ist. Die Stromverwaltung 15 umfasst weiterhin einen Komparator 21, dessen Signalausgang 22 mit dem rücksetzenden (RESET-)Eingang 23 des Bistabilschalters 20 verbunden ist. Der Messeingang 24 des Komparators 21 greift eine Messspannung Um ab, die über einem in die Antriebsstromleitung 25 (Fig. 1) der Steuereinheit 1 geschalteten Messwiderstand Rm abfällt. Die Messspannung Um ist nach Um = I · Rm proportional zu dem in der Antriebsstromleitung 25 fließenden Antriebsstrom I. An dem Referenzeingang 26 des Komparators 21 liegt eine vorgegebene, zum Zwecke der Drehzahlregelung verstellbare Referenzspannung Ur an.

Der Signalausgang 27 des Bistabilschalters 20 und der Signalausgang 18 des Taktgebers 17 sind mit jeweils einem der beiden Eingänge 28 bzw. 29 eines UND-Gatters 30 verbunden. An dem Signalausgang 31 des UND-Gatters 30 ist das PWM-Signal SP abgreifbar.

Als Bistabilschalter 20 wird ein elektronisches Bauelement verstanden, das ein logisches, d.h. binär zwischen einem "0"-Zustand und einem "1"-Zustand wechselndes Signal ausgibt. Dieses Ausgabesignal wechselt hierbei von "0" auf "1 ", wenn ein Signalpuls auf seinem SET-Eingang 19 gelegt wird. Der "1 "-Zustand wird so lange beibehalten, bis ein Signalpuls auf den RESET-Eingang 23 gelegt wird.

Als Komparator 21 wird ein elektronisches Bauelement verstanden, das ein von dem Verhältnis der an seinem Messeingang 24 und seinem Referenzeingang 26 anliegenden Spannungen abhängiges Ausgangssignal ausgibt. Das Ausgangssignal hat hierbei den Wert "0", wenn die am Messeingang 24 anliegende Spannung Um die am Referenzeingang 26 anliegende Spannung Ur unterschreitet, und einen "1 "-Wert, wenn die am Messeingang 24 anliegende Spannung Um die am Referenzeingang 26 anliegende Spannung Ur übersteigt.

Als UND-Gatter 30 wird ein elektronisches Bauelement verstanden, das ein Ausgangssignal mit dem logischen Wert "1" ausschließlich dann ausgibt, wenn an beiden Eingängen 28 und 29 ein Signal des Werts "1" anliegt, und dessen Ausgangssignal ansonsten den Wert "0" aufweist.

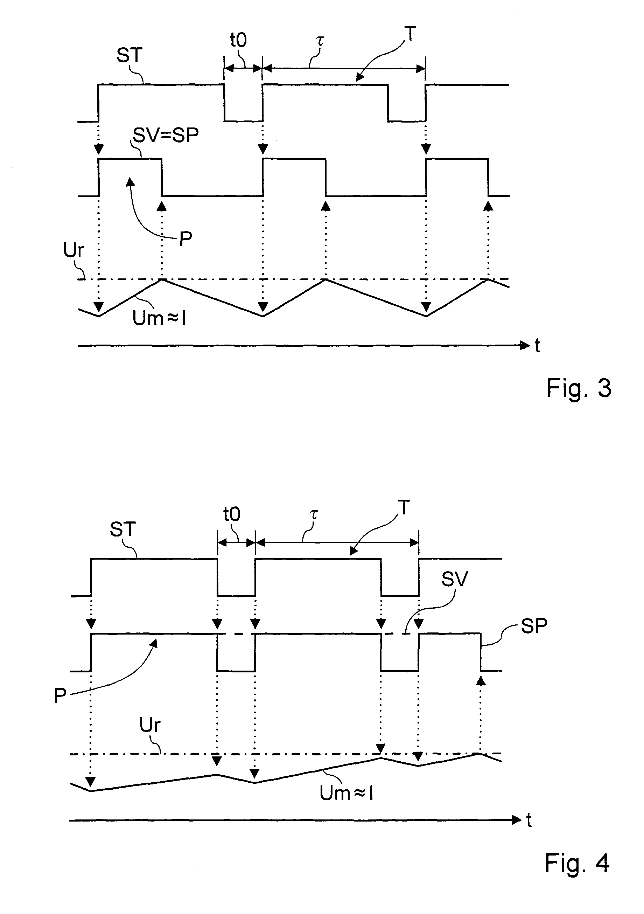

Der Taktgeber 17 gibt über seinen Signalausgang 18 ein Taktsignal ST aus, dessen Abhängigkeit von der Zeit t in Fig. 3 dargestellt ist. Wie aus dem Diagramm erkennbar ist, ist das Taktsignal ST ein logisches Signal, das sich mit der Periodendauer τ periodisch wiederholt. Die Periodendauer τ beträgt ca. 50 bis 70 µsec. Dies entspricht einer Grundfrequenz von ca. 16 bis 20 kHz. Das Taktsignal ST umfasst somit nur Frequenzanteile, die am äußersten Rand bzw. außerhalb des vom Menschen hörbaren Frequenzbereiches (< 20 kHz) liegen.

Ein Abschnitt des Taktsignals ST mit der Periodendauer τ ist nachfolgend als Takt T bezeichnet. Innerhalb jedes Taktes T nimmt das Taktsignal ST für eine vorgegebene Mindestschaltzeit t0, die bevorzugt ca. 5% der Periodendauer τ den Wert "0" an. Für die Restdauer des Taktes T nimmt das Taktsignal ST den Wert "1" an.

Gemäß Fig. 2 liegt das Taktsingal ST an dem SET-Eingang 19 des Bistabilschalters 20 an und löst einen Schaltprozess des Bistabilschalters 20 aus, sobald zu Beginn jedes Taktes T der Wert des Taktsignals ST von "0" auf "1" springt. Im Zuge dieses Schaltprozesses wechselt der Wert eines am Signalausgang 27 des Bistabilschalters 20 ausgegebenen Pulsvorgabesignals SV von "0" auf "1". Da nun an beiden Eingängen 28 und 29 des UND-Gatters 30 ein "1"-Wert anliegt, schaltet auch das UND-Gatter 30 ausgangsseitig auf "1" und startet somit einen Steuerpuls P des PWM-Signals SP. Während des Steuerpulses P steigt durch entsprechende Schaltung der Leistungsschalter 10a,10b der Betrag des Motorstroms I sukzessive an, wie aus Fig. 3 anhand des Verlaufs der proportionalen Messspannung Um erkennbar ist.

Der Zustand des Bistabilschalters 20, und damit der Zustand des Pulsvorgabesignals SV bleibt erhalten, bis der Antriebsstrom I eine vorgegebene Schwelle überschreitet, und infolgedessen auch die hierzu proportionale Messspannung Um die Referenzspannung Ur erreicht oder diese übersteigt. Hierdurch schaltet der Komparator 21 ausgangsseitig von "0" auf "1", wodurch der Rückschaltprozess des Bistabilschalters 20 ausgelöst wird, so dass das Pulsvorgabesignal SV von "1" auf "0" zurückgesetzt wird. Der jeweilige Kausalzusammenhang zwischen dem Zustand der Signale ST und Um einerseits und einem Betragswechsel des Pulsvorgabesignals SV bzw. PWM-Signals SP andererseits ist in Fig. 3 durch gepunktete Pfeile angedeutet.

Solange, wie in Fig. 3 dargestellt, die Messspannung Um innerhalb jedes Taktes T die Referenzspannung Ur erreicht, wird auch das Pulsvorgabesignal SV innerhalb jedes Taktes T unter Wirkung des Komparators 21 auf "0" zurückgesetzt. Infolge der Verknüpfungseigenschaften des UND-Gatters 30 folgt das PWM-Signal SP dem Pulsvorgabesignal SV. Die Stromverwaltung 15 arbeitet in diesem Fall wie die Stromverwaltung einer herkömmlichen PWM-Steuerung im Strommodus.

Ist dagegen, wie in Fig. 4 dargestellt, die Anstiegsrate des Antriebsstroms I, und damit die Anstiegsrate der Messspannung Um so gering, dass letztere innerhalb eines Taktes T die Referenzspannung Ur nicht erreicht, so schaltet das UND-Gatter 30, dem Taktsignal ST folgend, das PWM-Signal SP für die Mindestschaltzeit t0 zwangsweise ab und unterbricht somit den Steuerpuls P, während das Pulsvorgabesignal SV den Wert "1" beibehält.

Auf diese Weise werden langwellige Frequenzanteile des Antriebsstroms I (und entsprechend der Messspannung Um) weitgehend unterdrückt, wodurch die hörbare Geräuscherzeugung beim Betrieb des Elektromotors 2 wirksam reduziert ist.

### Bezugszeichenliste

- 1: Steuereinheit
- 2: Elektromotor
- 3: Erregerspule
- 4: Rotor
- 10a,10b: Leistungsschalter
- 11: Phasenabgriff
- 12: Leistungstransistor
- 13: Freilaufdiode
- 14: Phasensteuerung
- 15: Stromverwaltung
- 16: Rotorlageerfassungseinheit
- 17: Taktgeber
- 18: Signalausgang
- 19: (SET)-Eingang
- 20: Bistabilschalter
- 21: Komparator
- 22: Signalausgang
- 23: (RESET)-Eingang
- 24: Messeingang
- 25: Antriebsstromleitung
- 26: Referenzeingang
- 27: Signalausgang
- 28: Eingang
- 29: Eingang
- 30: UND-Gatter
- 31: Signalausgang

- I: Antriebsstrom
- P1,P2,P3: Phase
- VDD: Betriebspotential
- M: Masse
- SL: Lagesignal
- SP: PWM-Signal
- Ui: Induktionsspannung
- Um: Messspannung
- Rm: Messwiderstand
- ST: Taktsignal
- t: Zeit
- τ: Periodendauer
- T: Takt
- t0: Mindestschaltzeit
- SV: Pulsvorgabesignal
- P: Steuerpuls

## Patentansprüche

1. Verfahren zur pulsweitenmodulierten Steuerung eines Antriebsstroms (I) für einen Elektromotor (2), bei welchem in Abhängigkeit eines periodischen Taktsignals (ST) ein Steuerpuls (P) eines PWM-Signals (SP) gestartet wird, und bei welchem der Steuerpuls (P) beendet wird, wenn der Antriebsstrom (I) einen vorgegebenen Referenzwert überschreitet, wobei das PWM-Signal (SP) in jedem Takt (T) des Taktsignals (ST) für eine vorgegebene Mindestschaltzeit (t0) zwangsabgeschaltet wird.

2. Verfahren nach Anspruch 1,
**dadurch gekennzeichnet,**
**dass** das PWM-Signal (SP) durch eine logische UND-Verknüpfung des Taktsignals (ST) mit einem Pulsvorgabesignal (SV) erzeugt wird, wobei als Taktsignal (ST) ein binäres Signal herangezogen wird, das innerhalb jedes Taktes (T) während der Mindestschaltzeit (t0) den Wert "0" annimmt.

3. Steuereinheit (1) zur Erzeugung eines Antriebsstroms (I) für einen Elektromotor (2), mit einer Stromverwaltung (15) zur Ausgabe eines den Antriebsstrom (I) pulsweitenmodulierenden PWM-Signals (SP), wobei die Stromverwaltung (15) dazu ausgebildet ist, in Abhängigkeit eines periodischen Taktsignals (ST) einen Steuerpuls (P) des PWM-Signals (SP) zu starten, und den Steuerpuls (P) zu beenden, wenn der Antriebsstrom (I) einen Referenzwert übersteigt, und wobei die Stromverwaltung (15) dazu ausgebildet ist, das PWM-Signal (SP) in jedem Takt (T) des Taktsignals (ST) für eine vorgegebene Mindestschaltzeit (t0) zwangsabzuschalten.

4. Steuereinheit (1) nach Anspruch 3,
**gekennzeichnet durch**
einen Taktgeber (17), einen Bistabilschalter (20) und einen Komparator (21),
- wobei ein Signalausgang (18) des Taktgebers (17) mit dem SET-Eingang (19) des Bistabilschalters (20) verbunden ist,
- wobei der Komparator (21) eingangsseitig an eine zu dem Antriebsstrom (I) proportionale Messspannung (Um) und eine Referenzspannung (Ur) angeschlossen ist und
- wobei der Komparator (21) ausgangsseitig mit dem RESET-Eingang (23) des Bistabilschalters (20) verbunden ist,
sowie **durch** ein UND-Gatter (30), das eingangsseitig mit dem Signalausgang (18) des Taktgebers (17) und dem Signalausgang (27) des Bistabilschalters (20) verbunden ist, und an welchem ausgangsseitig das PWM-Signal (SP) abgreifbar ist.

5. Steuereinheit (1) nach Anspruch 3 oder 4,
**dadurch gekennzeichnet,**
**dass** der Taktgeber (17) dazu ausgebildet ist, das Taktsignal (ST) als binäres Signal auszugeben, das während jedem Takt für die Dauer der Mindestschaltzeit (t0) den Wert "0" annimmt.
